# EUROPÄISCHE PATENTANMELDUNG

(11) **EP 4 050 969 A1**
(43) Veröffentlichungstag der Anmeldung: **31.08.2022**
(21) Anmeldenummer: 22157989.9
(22) Anmeldetag: 22.02.2022
(51) Int. Cl.: H05B 1/02, G05D 23/19, G05D 23/275

(54) **VORRICHTUNG UND VERFAHREN ZUM BETREIBEN EINER HEIZEINRICHTUNG**

(30) Priorität: 26.02.2021 DE 102021104654
(71) Anmelder: Robert Bosch GmbH, 70442 Stuttgart (DE)
(72) Erfinder: Rickardsson, Joakim, 573 93 Tranas (SE); Covita, Daniel, 3060-123 Cantanhede (PT); Eklund, Gunnar, 573 92 Tranas (SE); Tollsten, Mikael, 573 93 Tranas (SE); Dias, Fernando, 4785-189 Trofa, Porto (PT); Furtado, Rodrigo, 4405-708 Vila Nova de Gaia (PT); Karmskog, Dick, 573 39 Tranas (SE)

(57) **Zusammenfassung**

Vorrichtung (100) zum Betreiben einer Heizeinrichtung (200), aufweisend eine nicht-selbst-rücksetzbare Schalteinrichtung (10) mit einer ersten definierten Auslösetemperatur (T1) und eine automatisch rücksetzbare Schalteinrichtung (20) mit einer zweiten definierten Auslösetemperatur (T2); wobei die Auslösetemperatur (T2) der automatisch rücksetzbaren Schalteinrichtung (20) definiert niedriger ist als die Auslösetemperatur (T1) der nicht-selbstrücksetzbaren Schalteinrichtung (10), wobei die Schalteinrichtungen (10, 20) an eine Steuereinrichtung (30) angeschaltet sind, wobei die Vorrichtung (100) ausgebildet ist, dass die Heizeinrichtung (200) aufgrund eines Auslösens wenigstens der automatisch rücksetzbaren Schalteinrichtung (20) mittels einer an die Steuereinrichtung (30) angeschalteten Rücksetzeinrichtung (5) definiert an eine elektrische Versorgungsspannung (L, N) schaltbar sind.

## Beschreibung

Die Erfindung betrifft eine Vorrichtung zum Betreiben einer Heizeinrichtung. Die Erfindung betrifft ferner ein Verfahren zum Betreiben einer Heizeinrichtung. Die Erfindung betrifft ferner ein Computerprogrammprodukt.

### Stand der Technik

Sicherheits-Temperaturbegrenzer sind in elektrischen Systemen als Sicherheitseinrichtungen gut bekannt und sind dort insbesondere dafür vorgesehen, mögliche Gefahren aufgrund von elektrischen Fehlfunktionen der elektrischen Systeme weitgehend zu vermeiden. Eine Sicherheit von Zusatzheizungen, die in Wärmepumpen zur Raumheizung verwendet werden, hängt in einem großen Ausmaß von Thermowächtern bzw. thermischen Abschalteinrichtungen ab. Der Standard IEC 60335-2-40, welcher aus IEC 60335-1 abgeleitet ist, sieht dabei eine Verwendung einer nicht selbst-rücksetzbaren, thermisch gesteuerten Abschalteinrichtung (engl. thermal cut-out) vor, um die Zusatzheizung im Falle einer Fehlfunktion der Wärmepumpe zur Raumheizung abzuschalten.

In herkömmlichen Wärmepumpen zur Raumheizung mit einem nicht selbst getriggerten Sicherheits-Kapillarrohrthermostaten (engl. safety thermostat bulb, STB) als Sicherheitseinrichtung für den Hilfsheizer resultieren die meisten Servicefälle aufgrund eines Auslösens der Sicherheits-Kapillarrohrthermostaten nicht aus Systemdefekten, sondern aus einer Begrenzung der STB-Technologie.

Die Sicherheits-Kapillarrohrthermostaten sind nämlich gegenüber Umgebungstemperatur eher sensitiv und können auslösen, wenn sie sehr niedrigen Umgebungstemperaturen ausgesetzt sind, was zum Beispiel während Lagerung oder Transport, insbesondere in nordischen Ländern auftreten kann.

Daher ist es wahrscheinlich, dass während der Installation ein ausgelöster Sicherheits-Kapillarrohrthermostat unbemerkt bleibt.

Nachdem die Zusatzheizung als ein Backup für den Wärmepumpenkreislauf dient, wenn der Wärmebedarf die verfügbare thermische Energie übersteigt, kann es eine Weile dauern, bis der erste Betrieb eintritt, in Abhängigkeit von Wärmebedarf und Umgebungsbedingungen.

### Offenbarung der Erfindung

Es ist eine daher eine Aufgabe der vorliegenden Erfindung, eine Vorrichtung zum Betreiben einer Heizeinrichtung bereitzustellen, die die oben genannten Nachteile weitgehend vermeidet.

Die Aufgabe wird gemäß einem ersten Aspekt gelöst mit einer Vorrichtung zum Betreiben einer Heizeinrichtung, aufweisend:
- eine nicht-selbst-rücksetzbare Schalteinrichtung mit einer ersten definierten Auslösetemperatur;
- eine automatisch rücksetzbare Schalteinrichtung mit einer zweiten definierten Auslösetemperatur;
- wobei die Auslösetemperatur der automatisch rücksetzbaren Schalteinrichtung definiert niedriger ist als die Auslösetemperatur der nicht-selbst-rücksetzbaren Schalteinrichtung, wobei die Schalteinrichtungen an eine erste Steuereinrichtung angeschaltet sind, wobei die Vorrichtung ausgebildet ist, dass die Heizeinrichtung aufgrund eines Auslösens wenigstens der automatisch rücksetzbaren Schalteinrichtung mittels einer an die erste Steuereinrichtung angeschalteten Rücksetzeinrichtung definiert an eine elektrische Versorgungsspannung schaltbar ist.

Vorteilhaft können auf diese Weise mittels der automatisch rücksetzbaren Schalteinrichtung eine Sicherheitsfunktionalität umgesetzt und die Heizelemente der Heizeinrichtung definiert an die elektrische Versorgungsspannung geschaltet werden. Vorteilhaft umfasst die Vorrichtung zur Erfüllung von Standards nach wie vor eine nicht-selbst-rücksetzbare (z.B. manuell rücksetzbare) Schalteinrichtung.

Die Aufgabe wird gemäß einem zweiten Aspekt gelöst mit einem Verfahren zum Betreiben Heizeinrichtung, aufweisend die Schritte:
- Erfassen eines Zustands einer nicht-selbst-rücksetzbaren Schalteinrichtung mit einer ersten Auslösetemperatur und eines Zustands einer automatisch rücksetzbaren Schalteinrichtung mit einer Auslösetemperatur, wobei die Auslösetemperatur der automatisch rücksetzbaren Schalteinrichtung definiert niedriger ist als die Auslösetemperatur der nicht-selbst-rücksetzbaren Schalteinrichtung; und
- Definiertes Schalten aller Heizelemente der Heizeinrichtung an eine elektrische Versorgungsspannung aufgrund eines Auslösens der automatisch rücksetzbaren Schalteinrichtung.

Bevorzugte Ausführungsformen der Vorrichtung sind Gegenstand von abhängigen Ansprüchen.

Eine bevorzugte Weiterbildung der Vorrichtung ist dadurch gekennzeichnet, dass mit den Schalteinrichtungen Schaltelemente einer Schalteinrichtung schaltbar sind, mit denen alle Heizelemente der Heizeinrichtung an die elektrische Versorgungsspannung schaltbar sind. Auf diese Weise können die Heizelemente der Heizeinrichtung sämtlich vom Versorgungskreis getrennt werden, wodurch ein Sicherheitsniveau vorteilhaft erhöht sein kann.

Eine weitere bevorzugte Weiterbildung der Vorrichtung ist dadurch gekennzeichnet, dass mit den Schalteinrichtungen Schaltelemente einer Schalteinrichtung schaltbar sind, mit denen die gesamte Heizeinrichtung an die elektrische Versorgungsspannung schaltbar sind. Vorteilhaft ist dadurch die Sicherheit des Schaltens der Heizeinrichtung noch weiter verbessert.

Eine weitere bevorzugte Weiterbildung der Vorrichtung sieht vor, dass sie weiterhin eine elektronische Recheneinrichtung aufweist, wobei zum Triggern von Schaltern zum Verhindern eines automatischen Rücksetzens der Heizeinrichtung mittels der automatisch rücksetzbaren Schalteinrichtung eine elektrische Spannungsdifferenz an Eingängen der elektronischen Recheneinrichtung erfasst wird. Auf diese Weise wird auf der elektronischen Recheneinrichtung eine Software getriggert, die Ausgangssignale zum Ansteuern von Schaltelementen zum Ansteuern von Schaltelementen für die elektrischen Heizelemente ausgibt.

Eine weitere bevorzugte Ausführungsform der Vorrichtung zeichnet sich dadurch aus, dass mittels der elektronischen Recheneinrichtung ein Schalten von Schaltern zum Schalten aller Heizelemente der Heizeinrichtung an die elektrische Versorgungsspannung initiiert wird.

Eine weitere bevorzugte Ausführungsform der Vorrichtung zeichnet sich dadurch aus, dass mit der elektrischen Spannung an den Eingängen der Rechnereinrichtung Alarme generierbar sind, mit denen erkennbar ist, welche der Schalteinrichtungen temperaturbedingt ausgelöst hat. Auf diese Weise kann vorteilhaft erkannt werden, welche der Schaltereinrichtungen temperaturbedingt, z.B. durch Luft im System, ausgelöst hat

Eine weitere bevorzugte Ausführungsform der Vorrichtung zeichnet sich dadurch aus, dass die Schalteinrichtungen als Einrichtungen ausgebildet sind, die einen elektrischen Schaltkreis öffnen, wenn ein Temperaturschwellwert erreicht wird. Dies können beispielsweise Bimetall-Thermostaten sein, denkbar sind aber auch andere Varianten der temperatur-gesteuerten Schalteinrichtungen.

Eine weitere bevorzugte Ausführungsform der Vorrichtung zeichnet sich dadurch aus, dass sie ferner eine Rücksetzeinrichtung aufweist, mittels derer alle Heizelemente der Heizeinrichtung an die elektrische Versorgungsspannung anschaltbar sind. Dadurch wird eine komfortable Möglichkeit bereitgestellt, nach einer erfolgten Fehleranalyse die Heizeinrichtung wieder in den elektrischen Versorgungskreis zu schalten.

Eine weitere bevorzugte Ausführungsform der Vorrichtung zeichnet sich dadurch aus, dass die Rücksetzeinrichtung eine Mensch-Maschine-Schnittstelle ist. Denkbar sind auch andere Arten von Rücksetzeinrichtungen, wie z.B. WiFi-Modul, App einer elektronischen Einrichtung (z.B. Smartphone, Tablet, Notebook, usw.).

Die Erfindung wird im Folgenden mit weiteren Merkmalen und Vorteilen anhand von drei Figuren im Detail beschrieben. Gleiche oder funktionsgleiche Elemente haben darin gleiche Bezugszeichen. Die Figuren sind insbesondere dazu gedacht, die erfindungswesentlichen Prinzipien zu verdeutlichen.

Offenbarte Vorrichtungsmerkmale ergeben sich analog aus entsprechenden offenbarten Verfahrensmerkmalen und umgekehrt. Dies bedeutet insbesondere, dass sich Merkmale, technische Vorteile und Ausführungen betreffend die Vorrichtung zum Betreiben einer Heizeinrichtung aus entsprechenden Ausführungen, Merkmalen und technischen Vorteilen betreffend das Verfahren zum Betreiben der Heizeinrichtung ergeben und umgekehrt.

In den Figuren zeigt:
- Fig. 1: ein Blockschaltbild der vorgeschlagenen Vorrichtung zum Betreiben einer Heizeinrichtung;
- Fig. 2: ein Blockschaltbild eines Leistungsteils der vorgeschlagenen Vorrichtung; und
- Fig. 3: ein Ablaufdiagramm eines Verfahrens zum Betreiben einer Heizeinrichtung.

### Beschreibung von Ausführungsformen

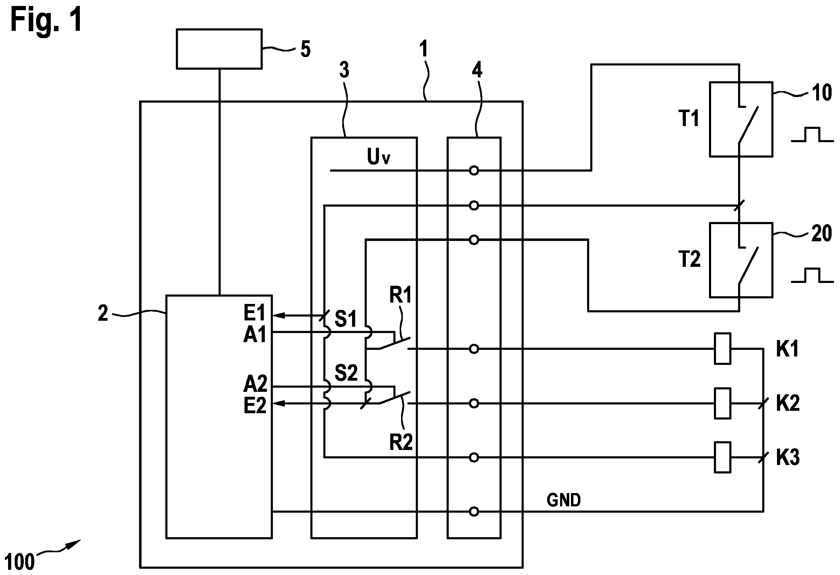

Fig. 1 zeigt ein Blockschaltbild der vorgeschlagenen Vorrichtung 100. Man erkennt eine Leiterplatte 1, auf der eine elektronische Recheneinrichtung 2 (z.B. CPU, Mikrocontroller, usw.), eine erste Schalteinrichtung 3 und ein Steckerelement 4 angeordnet sind. Man erkennt ferner eine nicht-selbst-rücksetzbare Schalteinrichtung 10 (z.B. manuell rücksetzbare Schalteinrichtung), vorzugsweise in Form einer thermischen Abschalteinrichtung (z.B. Bimetall-Thermostat) und eine automatisch rücksetzbare Schalteinrichtung 20, vorzugsweise ebenfalls in Form einer thermischen Abschalteinrichtung (z.B. Bimetall-Thermostat). Eine Auslöseschwelle bzw. -temperatur T2 der automatisch rücksetzbaren Schalteinrichtung 20 ist definiert niedriger.

Die Temperaturen T1, T2 sollten so gewählt sein, dass bei einer Temperatur T2, bei der die automatisch rücksetzbare Schalteinrichtung 20 auslöst, die nicht-selbst-rücksetzbare Schalteinrichtung 10 noch nicht auslöst. Dies hängt in der Regel von einer Leistung der Heizeinrichtung 200 und einer Wärmekapazität eines Behälters ab, in welchem die Heizelemente 201, 202 der Heizeinrichtung 200 zusammen mit den Schalteinrichtungen 10, 20 angeordnet sind. Exemplarisch kann die Temperatur T2 z.B. ca. 85°C betragen und die Temperatur T1 z.B. ca. 105°C. Denkbar sind natürlich auch andere Temperaturen T1, T2.

Auf diese Weise löst die automatisch rücksetzbare Schalteinrichtung 20 bei niedriger Umgebungstemperatur in der Regel früher aus als die nicht-selbst-rücksetzbare Schalteinrichtung 10. Eine ausgelöste nicht-selbst-rücksetzbare Schalteinrichtung 10 kann z.B. nur manuell rückgesetzt oder bei einmal verwendbaren Schalteinrichtungen 10 (z.B. Sicherung) ausgetauscht werden.

Vorgeschlagen wird, dass eine elektrische Versorgungsspannung Uv(z.B. 24V) an die nicht-selbst-rücksetzbare Schalteinrichtung 10 und an die automatisch rücksetzbare Schalteinrichtung 20 zugeführt wird. Im Falle eines Auslösens aufgrund einer kritischen Temperatur, die auf einen Gefahrenfall hinweisen kann, löst zunächst die automatisch rücksetzbare Schalteinrichtung 20 aus, wodurch an Eingängen E1, E2 der elektronischen Recheneinrichtung 2 eine elektrische Spannungsdifferenz erfasst wird.

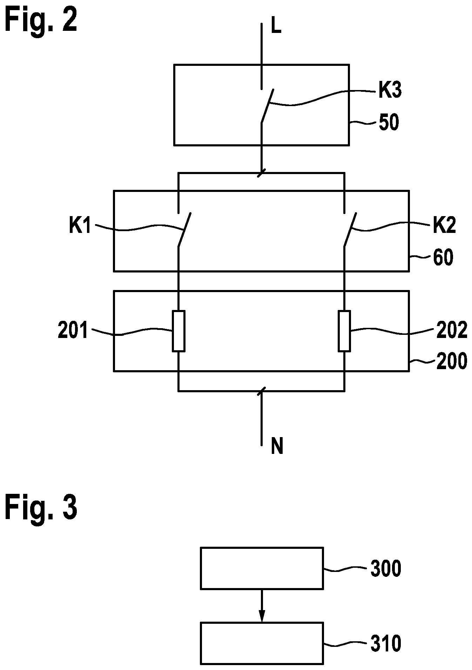

In Reaktion darauf werden an Ausgängen A1, A2 der elektronischen Recheneinrichtung 2 Steuersignale S1, S2 zum Schalten von Schaltern R1, R2 (z.B. Relais, Schütze) der ersten Schalteinrichtung 3 gegeben. Dadurch werden die Schalter R1, R2 geschlossen, wodurch über Schaltelemente K1, K2 (z.B. Schütze, Relais, usw.) einer dritten Schalteinrichtung 60 (siehe Fig. 2) sämtliche elektrischen Heizelemente 201, 202 einer Heizeinrichtung 200 (z.B. Heizelemente einer Hilfsheizung einer Wärmepumpe für die Bereitstellung von zusätzlicher thermischer Energie) von einer elektrischen Versorgungsspannung L, N abgeschaltet bleiben. Vorteilhaft werden dadurch Steuersignale S1, S2 zum definierten Schalten sämtlicher Heizelemente 201, 202 der Heizeinrichtung an eine elektrische Versorgungsspannung L, N bereitgestellt. Im Falle eines automatischen Rücksetzens der automatisch rücksetzbaren Schalteinrichtung 20 wird dies von der elektronischen Recheneinrichtung 2 erkannt und es bleiben mittels der Steuersignale S1, S2 die Schalter R1, R2 zum Schalten von Schaltelementen der dritten Schalteinrichtung 60 aller elektrischen Heizelemente 201, 202 an die elektrische Versorgungsspannung L, N weiterhin getrennt.

Fig. 2 zeigt eine elektrische Heizeinrichtung 200 mit elektrischen Heizelementen 201, 202, die mittels elektrischer Schaltelemente K1 bis K3 geschaltet werden können. Man erkennt in Zusammenschau mit Fig. 1, dass mittels der Schalter R1, R2 die elektrischen Schaltelemente K1, K2 alle Heizelemente 201, 202 von der elektrischen Versorgungsspannung L, N abgeschaltet bzw. an diese angeschaltet werden können.

In Fig. 2 ist in Zusammenschau mit Fig. 1 weiterhin erkennbar, dass ein Schaltelement K3 (z.B. Schütz, Relais, usw.) einer zweiten Schalteinrichtung 50 ausschließlich über die nicht-selbst-rücksetzbare Schalteinrichtung 10 schaltbar ist, wodurch eine An- bzw. Abschaltung der gesamten elektrischen Heizeinrichtung 200 an die elektrische Versorgungsspannung L, N durchgeführt werden kann. Dadurch ist es mit dem Schaltelement K3 möglich, die gesamte Heizeinrichtung 200 spannungslos bzw. an die elektrische Versorgungsspannung L, N zu schalten, wodurch die Normvorschriften von IEC 60335-1 Standard und Teil 2 für Heizpumpen Wasserheizer IEC 60335-2-40 erfüllt werden. Nach dieser Vorschrift ist verpflichtend vorgesehen, dass in jedem Fall eine nicht-selbst-rücksetzbare (z.B. manuell rücksetzbare) Schalteinrichtung 10 vorgesehen sein muss.

Es versteht sich von selbst, dass die im erläuterten Beispiel angegebene Anzahl von elektrischen Heizelementen 201, 202 lediglich beispielhaft ist und dass auch die Anzahl der Schalter R1, R2 der ersten Schalteinrichtung 3 bzw. der Schaltelemente K1, K2 der Schalteinrichtungen 50, 60 lediglich beispielhaft sind. In anderen, nicht in Figuren dargestellten Varianten der vorgeschlagenen Vorrichtung 100 kann somit eine unterschiedliche Anzahl von elektrischen Heizelementen 201, 202 bzw. Schaltelementen K1, K2 bzw. Schalter R1, R2 realisiert sein.

Optional (z.B. wenn es ein Standard oder eine Normvorschrift erlaubt) kann die automatisch rücksetzbare Schaltrichtung 20 auch mit dem Schaltelement K3 der zweiten Schalteinrichtung 50 verbunden sein (nicht in Figuren dargestellt).

Die Schalteinrichtungen 10, 20 müssen eine Totbandregion mit separierten Temperaturen T1, T2 aufweisen, wobei die Totbandregion groß genug ist, um zu vermeiden, dass beide Schalteinrichtungen 10, 20 im Falle eines anormalen Betriebs der Vorrichtung 100 auslösen. Die automatisch rücksetzbare Schalteinrichtung 20 weist in der Regel eine niedrigere Auslösetemperatur auf, daher muss der Niederspannungsschaltkreis in einer Art und Weise ausgelegt sein, dass im Falle eines Auslösens der automatisch rücksetzbaren Schalteinrichtung 20 diese das Schaltelement K3 bzw. die Gruppe der Schaltelemente K3 nicht beeinflusst. Das Schaltelement bzw. die Gruppe der Schaltelemente K3 darf daher idealerweise nur im Falle eines Auslösens der nicht-selbst-rücksetzbaren Schalteinrichtung 10 beeinflusst werden. Auf diese Weise wird Satz 22.102.2 der obengenannten Norm erfüllt.

In einer vorteilhaften Variante der Vorrichtung 100 kann vorgesehen sein, dass mit der elektrischen Spannung an den Eingängen E1, E2 der elektronischen Rechnereinrichtung 2 Alarme (z.B. akustisch, und/oder optisch, und/oder haptisch, usw.) generierbar sind. Vorteilhaft ist auf diese Weise erkennbar ist, welche der Schalteinrichtungen 10, 20 temperaturbedingt ausgelöst hat. In der Regel kann die automatisch rücksetzbare Schalteinrichtung 20 alleine auslösen, die nicht-selbst-rücksetzbare Schalteinrichtung 10 hingegen nicht, außer im Falle einer Fehlfunktion der automatisch rücksetzbaren Schalteinrichtung 20.

Vorteilhaft ist es möglich, mittels einer Rücksetzeinrichtung 5, beispielsweise in Form einer Mensch-Maschine-Schnittstelle (z.B. auf einem Computer, Laptop, Tablet, Smartphone, App, usw.) vor Ort oder funkbasiert aus der Ferne, die obengenannten Signale S1, S2 an den Ausgängen A1, A2 der elektronischen Recheneinrichtung 2 auszugeben. Dies erfolgt vorteilhaft mittels eines Softwareprogramms, welches auf der elektronischen Recheneinrichtung 2, beispielsweise in Form eines Mikrocontrollers, Mikroprozessors oder dergleichen abläuft. Vorteilhaft ist es auch möglich, die Rücksetzeinrichtung 5 als eine diskrete Schalteinrichtung auszubilden, die funktional an die elektronische Recheneinrichtung 2 angebunden ist. Auf diese Weise ist es mittels der Rücksetzeinrichtung 5 möglich, alle Heizelemente 201, 202 der Heizeinrichtung 200 bei Nicht-Vorliegen eines Gefahrenzustands wieder an die elektrische Versorgungsspannung L, N anzuschalten. Auf diese Weise ist es möglich, die Vorrichtung 100 nur dann durch einen Servicetechniker inspizieren zu lassen, wenn ein tatsächlicher Fehlerfall vorliegt. Auf diese Weise kann auf komfortable Weise ein "Remote-Reboot" des Systems durchgeführt werden.

Dies kann zum Beispiel erreicht werden wie im Beispiel von Fig. 1: In elektrischer Hinsicht ist die automatisch rücksetzbare Schalteinrichtung 20 in Serie mit einer Parallelschaltung der automatisch rücksetzbaren Schalteinrichtung 20 mit dem Schaltelement K3 verschaltet.

Auf diese Weise wird, falls die Steuerspannung Uv und die Funktion der Heizeinrichtung 200 mittels der automatisch rücksetzbaren Schalteinrichtung 20 unterbrochen sind, mittels der Schalter R1, R2 unterbrochen gehalten, nachdem die Steuersignale S1, S2 übermittelt wurden. Dadurch wird im Falle des Rücksetzens der automatisch rücksetzbaren Schalteinrichtung 20 die Heizeinrichtung 200 weiterhin abgeschaltet gehalten.

Im Falle eines Auslösens der nicht-selbst-rücksetzbaren Schalteinrichtung 10 besteht kein Erfordernis eines Öffnens der Schalter R1, R2. Ein Öffnen der Schalter R1, R2 kann nur durch einen Reset von der Rücksetzeinrichtung 5 bewirkt werden, der aber nicht möglich ist, wenn die nicht-selbst-rücksetzbare Schalteinrichtung 10 ausgelöst hat.

Daher kann System nur durch einen Reset der nicht-selbst-rücksetzbaren Schalteinrichtung 10 zurückgesetzt werden, was ein Ziel von Satz 22.102.2 von IEC 60335-2-40 ist.

Um eine Möglichkeit bereitzustellen, die Heizeinrichtung 200 im Falle eines anormalen Betriebs (z.B. bei Übertemperatur) rückzusetzen, sind im Niederspannungskreis zusätzliche Schalter R1, R2 oder dergleichen vorgesehen. Mit diesen Steuereinrichtungen ist es möglich, die Information des Niederspannungskreises zu nutzen, um die Heizeinrichtung 200 mit den Heizelementen 201, 202 definiert zu steuern, nachdem sie aufgrund eines Auslösens der automatisch rücksetzbaren Schalteinrichtung 20 abgeschaltet, d.h. von der elektrischen Versorgungsspannung L, N getrennt wurde.

Zu diesem Zweck wird das elektrische Signal nach der nicht-selbst-rücksetzbaren Schalteinrichtung 10 mit dem elektrischen Signal nach der automatisch rücksetzbaren Schalteinrichtung 20 verglichen. Falls das zuerst genannte Signal ON und das zweitgenannte Signal OFF ist, bedeutet dies, dass die automatisch rücksetzbare Schalteinrichtung 20 ausgelöst hat und daher die Schalter R1, R2 deaktiviert werden können, um die Steuerkreis zu den Schaltelementen K1, K2 der Schalteinrichtung 60 zu unterbrechen. Auf diese Weise kann vermieden werden, dass ein operativer Betrieb der Heizeinrichtung 200 nach dem Selbst-Rücksetzen der automatisch rücksetzbaren Schalteinrichtung 20 wieder aufgenommen wird.

In Fig. 1 erkennt man, dass bei Anliegen der elektrischen Steuerspannung Uv (z.B. 24V), bei geschlossenen Schaltern R1, R2 sowie geschlossenen Schalteinrichtungen 10, 20 die Schaltelemente K1... K3 der Schalteinrichtungen 50, 60 die Heizelemente 201, 202 an die elektrische Versorgungsspannung L, N angeschaltet sind, was einem Normalbetrieb der Heizeinrichtung entspricht.

In Fig. 1 bedeutet dies, dass das Signal, welches am Eingang E1 eingelesen wird, mit dem Signal am Eingang E2 verglichen wird. Wenn festgestellt wird, dass das Signal an E1 vorhanden ist aber nicht an E2, kann ein Signal an Ausgänge A1, A2 ausgegeben werden, um die Schalter R1, R2, und als Konsequenz davon die Schaltelemente K1, K2 zu öffnen. Mit den geöffneten Schaltern R1, R2 können die Schaltelemente K1, K2 die Heizelemente 201, 202 der Heizeinrichtung 200 nicht an die elektrische Versorgungsspannung L, N angeschaltet werden, selbst dann nicht, wenn die automatisch rücksetzbare Schalteinrichtung 20 den Niederspannungskreis schließt, nachdem die automatisch rücksetzbare Schalteinrichtung 20 automatisch rückgesetzt wurde.

Daher kann, nachdem die automatisch rücksetzbare Schalteinrichtung 20 ausgelöst hat, die Heizeinrichtung 200 wieder eingeschaltet werden nur nachdem ein Bestätigungssignal über die Ausgänge A1, A2 zu den Schaltern R1, R2 geschickt wurde, um den Niederspannungsschaltkreis der Schaltelemente K1, K2 der dritten Schalteinrichtung 60 zu schließen. Mit geeigneter Hardware und Software kann ein Triggersignal durch ein Bestätigen des Status des Systems durch den Nutzer an einer Mensch-Maschine-Schnittstelle des Systems oder auch aus der Ferne mittels eines geeigneten Typs von Fernkommunikation gesendet werden.

Zusätzlich können zwei separierte Alarme generiert werden, um es dem Anwender zu ermöglichen, die Ursache des anormalen Betriebs der Vorrichtung 100 zu ermitteln. Abhängig von dem Signal an den Eingängen E1, E2 ist es möglich, einen Typ von Schalteinrichtungen 10, 20, die den Alarm ausgelöst hat, zu verifizieren:
Falls die nicht-selbst-rücksetzbare Schalteinrichtung 10 ausgelöst hat, ist es erforderlich, die Vorrichtung 100 physisch zu öffnen, um die nicht-selbst-rücksetzbare Schalteinrichtung 10 manuell rückzusetzen oder auszutauschen bzw. zu reparieren.

Im Falle, dass am Eingang E1 ein elektrisches Signal vorhanden ist nicht jedoch am Eingang E2, hat die automatisch rücksetzbare Schalteinrichtung 20 ausgelöst und das System kann wiederhergestellt werden ohne Öffnen des Systems durch ein Bestätigen des Systems über die Rücksetzeinrichtung 5 oder aus der Ferne.

Die Funktion und das vorgeschlagene Design sind vorteilhaft unabhängig von einer Anzahl von Schaltelementen bzw. Schalter der Schalteinrichtungen 50, 60 welche somit vorteilhaft je nach Auslegung der Heizrichtung 200 dimensioniert bzw. adaptiert werden können.

Fig. 3 zeigt einen prinzipiellen Ablauf eines Verfahrens zum Betreiben einer Heizeinrichtung 200.

In einem Schritt 300 erfolgt ein Erfassen eines Zustands einer nicht-selbst-rücksetzbaren Schalteinrichtung 10 mit einer ersten Auslösetemperatur T1 und eines Zustands einer automatisch rücksetzbaren Schalteinrichtung 20 mit einer Auslösetemperatur T2, wobei die Auslösetemperatur T2 der automatisch rücksetzbaren Schalteinrichtung 20 definiert niedriger ist als die Auslösetemperatur T1 der nicht-selbst-rücksetzbaren Schalteinrichtung 10.

In einem Schritt 310 erfolgt ein definiertes Schalten aller Heizelemente 201, 202 der Heizeinrichtung 200 an eine elektrische Versorgungsspannung L, N aufgrund eines Auslösens der automatisch rücksetzbaren Schalteinrichtung 20.

Zusammenfassend werden eine Vorrichtung und ein Verfahren vorgeschlagen, mit dem eine Sicherheitsfunktionalität realisiert wird, indem eine Heizeinrichtung im Falle eines Auslösens einer automatisch rücksetzbaren Schalteinrichtung ausgelöst hat. Mittels einer an einer Recheneinrichtung erfassten elektrischen Spannung und eines Computerprogramms werden Schalter so lange offengehalten und damit sämtliche Heizelemente von der elektrischen Versorgungsspannung getrennt, bis mittels einer Rücksetzeinrichtung die Heizelemente wieder definiert an die elektrische Versorgungsspannung angeschaltet werden. Ein Sicherheitsniveau der Vorrichtung kann auf diese Weise vorteilhaft bedeutsam erhöht sein. Mittels der automatisch rücksetzbaren Schaltvorrichtung kann auf diese Weise ein Sicherheitsmerkmal realisiert werden, mittels dessen ein definiertes Anschalten aller Heizelemente der Heizeinrichtung an die elektrische Versorgungsspannung möglich ist.

Der Fachmann kann vorgehend auch nicht oder nur teilweise offenbarte Ausführungsformen der Erfindung realisieren, ohne vom Kern der Erfindung abzuweichen.

## Patentansprüche

1. Vorrichtung (100) zum Betreiben einer Heizeinrichtung (200), aufweisend eine nicht-selbst-rücksetzbare Schalteinrichtung (10) mit einer ersten definierten Auslösetemperatur (T1) und eine automatisch rücksetzbare Schalteinrichtung (20) mit einer zweiten definierten Auslösetemperatur (T2); wobei die Auslösetemperatur (T2) der automatisch rücksetzbaren Schalteinrichtung (20) definiert niedriger ist als die Auslösetemperatur (T1) der nicht-selbst-rücksetzbaren Schalteinrichtung (10), wobei die Schalteinrichtungen (10, 20) an eine erste Steuereinrichtung (3) angeschaltet sind, wobei die Vorrichtung (100) ausgebildet ist, dass die Heizeinrichtung (200) aufgrund eines Auslösens wenigstens der automatisch rücksetzbaren Schalteinrichtung (20) mittels einer an die erste Steuereinrichtung (3) angeschalteten Rücksetzeinrichtung (5) definiert an eine elektrische Versorgungsspannung (L, N) schaltbar ist.

2. Vorrichtung (100) nach Anspruch 1, **dadurch gekennzeichnet, dass** mit den Schalteinrichtungen (10, 20) Schaltelemente (K1, K2) einer Schalteinrichtung (60) schaltbar sind, mit denen alle Heizelemente (201, 202) der Heizeinrichtung (200) an die elektrische Versorgungsspannung (L, N) schaltbar sind.

3. Vorrichtung (100) nach Anspruch 2, **dadurch gekennzeichnet, dass** mit den Schalteinrichtungen (10, 20) Schaltelemente (K3) einer Schalteinrichtung (50) schaltbar sind, mit denen die gesamte Heizeinrichtung (200) an die elektrische Versorgungsspannung (L, N) schaltbar sind.

4. Vorrichtung (100) nach einem der vorhergehenden Ansprüche, weiterhin aufweisend eine elektronische Recheneinrichtung (2), wobei zum Triggern von Schaltern (R1, R2) zum Verhindern eines Rücksetzens der Heizeinrichtung (200) mittels der automatisch rücksetzbaren Schalteinrichtung (20) eine elektrische Spannungsdifferenz an Eingängen (E1, E2) der elektronischen Recheneinrichtung (2) erfasst wird.

5. Vorrichtung (100) nach Anspruch 4, **dadurch gekennzeichnet, dass** mittels der elektronischen Recheneinrichtung (2) ein Schalten von Schaltern (R1, R2) zum Schalten aller Heizelemente (201, 202) der Heizeinrichtung (200) an die elektrische Versorgungsspannung (L, N) initiiert wird.

6. Vorrichtung (100) nach einem der Ansprüche 4 bis 6, **dadurch gekennzeichnet, dass** mit der elektrischen Spannung an den Eingängen (E1, E2) der Rechnereinrichtung (2) Alarme generierbar sind, mit denen erkennbar ist, welche der Schalteinrichtungen (10, 20) temperaturbedingt ausgelöst hat.

7. Vorrichtung (100) nach einem der vorhergehenden Ansprüche, **dadurch gekennzeichnet, dass** die Schalteinrichtungen (10, 20) als Einrichtungen ausgebildet sind, die einen elektrischen Schaltkreis öffnen, wenn ein Temperaturschwellwert erreicht wird.

8. Vorrichtung (100) nach einem der vorhergehenden Ansprüche, ferner aufweisend eine Rücksetzeinrichtung (5), mittels derer alle Heizelemente (201, 202) der Heizeinrichtung (200) an die elektrische Versorgungsspannung (L, N) anschaltbar sind.

9. Vorrichtung (100) nach einem der vorhergehenden Ansprüche, dadurch, dass die Rücksetzeinrichtung (5) eine Mensch-Maschine-Schnittstelle ist.

10. Verfahren zum Betreiben einer Heizeinrichtung (200), aufweisend die Schritte:
- Erfassen eines Zustands einer nicht-selbst-rücksetzbaren Schalteinrichtung (10) mit einer ersten Auslösetemperatur (T1) und eines Zustands einer automatisch rücksetzbaren Schalteinrichtung (20) mit einer Auslösetemperatur (T2), wobei die Auslösetemperatur (T2) der automatisch rücksetzbaren Schalteinrichtung (20) definiert niedriger ist als die Auslösetemperatur (T1) der nicht-selbst-rücksetzbaren Schalteinrichtung (10); und
- Definiertes Schalten aller Heizelemente (201, 202) der Heizeinrichtung (200) an eine elektrische Versorgungsspannung (L, N) aufgrund eines Auslösens der automatisch rücksetzbaren Schalteinrichtung (20).

11. Computerprogrammprodukt mit Codemitteln zum Ausführen des Verfahrens nach Anspruch 10, wenn es auf einer Vorrichtung (100) zum Betreiben einer Heizeinrichtung (200) abläuft oder auf einem computerlesbaren Speichermedium gespeichert ist.
